# EUROPEAN PATENT SPECIFICATION

(11) **EP 1 451 536 B1**
(45) Date of publication and mention of the grant of the patent: **23.02.2011**
(21) Application number: 02782067.9
(22) Date of filing: 04.12.2002
(51) Int. Cl.: G01F 23/284, H01P 1/08

(54) **RADAR ANTENNA**
RADARANTENNE
ANTENNE RADAR

(30) Priority: 05.12.2001 SE 0104062
(43) Date of publication of application: 01.09.2004
(73) Proprietor: Rosemount Tank Radar AB, 402 51 Göteborg (SE)
(72) Inventor: WESTERLING, Jan, S-587 31 Linköping (SE); KRIG, Torbjörn, S-570 30 Mariannelund (SE)
(74) Representative: Fritsche, Daniel
(86) International application number: PCT/SE2002/002223
(87) International publication number: WO 2003/048697

(56) References cited:
- EP-A2- 0 762 089
- US-A- 5 115 218
- US-B1- 6 325 391
- PATENT ABSTRACTS OF JAPAN vol. 1998, no. 12 31 October 1998 & JP 10 197 617 A (MUSASHINO KIKI KK) 31 July 1998
- PATENT ABSTRACTS OF JAPAN vol. 12, no. 341 (P-758) 13 September 1988 & JP 63 100 331 A (KOBE STEEL LTD) 02 May 1988

## Description

### TECHNICAL FIELD

Radar antenna for transmission/reception of radar waves at measuring of a level of a surface of a liquid, wherein the liquid is contained in a tank, for example a tank on vessel, at a process manufactory or at an oil refinery. More specifically, the invention is aimed at minimizing disturbances from fluids, for example water condensed on the radar antenna.

### TECHNICAL BACKGROUND

When measuring a level of a surface of a liquid by means of a radar and its adherent radar antenna, wherein said liquid is contained in a tank, e. g. a tank on a vessel, at a process manufactory or at an oil refinery, different fluids may be present, whereby the fluids absorb and/or stop the propagation of the radar waves. It occurs that e. g. water condensates on parts of the radar antenna and thereby interrupts or disturbs the propagation of the radar waves.

By level measuring by means of a planar antenna belonging to prior art technology the radar waves are transmitted out from the planar antenna from radar wave emitting elements, such as patches, in a right angle from the plane surface of the planar antenna.

### OBJECT OF THE INVENTION

The object of the invention is to solve some of the problems mentioned above.

This is achieved by means of a device according to claim 1.

By providing a radar antenna used for transmission and reception of radar waves, when measuring a level of a liquid contained in a tank, for example a tank on a vessel, at a process manufactory or a tank at an oil refinery, with a sheet arranged in the path of the transmitted radar waves, that is between the antenna and the liquid, and by arranging a surface of said sheet facing the liquid in an angle inclined in relation to the horizontal plane, this implies that a fluid occuring on the surface, for example condensed water, is drained off from the surface by means of gravity.

The sheet can be arranged directly on the antenna or at a distance from the antenna, whereby in the later, the radar antenna is preferably placed screened of from the tank.

### DESCRIPTION OF THE DRAWINGS

The invention will be described closer in embodiments referring to figures as follows.
Fig. 1 shows a schematic side view of a tank with one side wall removed to make it able to more clearly show the interior of the tank and a radar antenna arranged at the roof of the tank.
Fig. 2 shows a schematic view of an alternative embodiment of the device according to the invention.
Fig. 3 shows a schematic view from below of the radar antenna according to figure 1, wherein the antenna includes patches arranged in a pattern.
Fig. 4 shows a schematic view of a tank from the side with one side wall removed to more clearly illustrate the interior of the tank and a radar antenna arranged at one side wall of the tank.

### DESCRIPTION OF EMBODIMENTS

A radar antenna is in the drawings denoted by 1 and a tank by 2 with the tank enclosing a liquid 3. The radar antenna 1 is, in the preferred embodiment, arranged at the roof 2a and directed downwards towards the liquid 3. When the radar antenna 1 is transmitting radar waves 4, these waves are reflected by the liquid 3 and the level of the surface 3a of the liquid can thereby be determined according to prior art techniques. The radar antenna 1 has a front surface 1a, wherefrom the radar waves 4 are transmitted. At the front surface 1a a substantially plane sheet 1b is arranged. The sheet 1b is, in a preferred embodiment, attached to and arranged on the front surface 1a of the radar antenna. The surface 1b of the sheet is arranged in an angle a to the horizontal plane H, so that portions of the liquid 3 or condensed liquid 3a, in general condensed water, which has been thrown up to the antenna by tank movements or condensated on the surface 1b of the sheet respectively can by means of gravity be drained off from the surface 1b of the sheet or the portion of the surface 1b of the sheet, which the radar waves 4 substantially passes. Thus, the radar waves 4 will pass the surface 1b of the sheet in a substantially undisturbed state, for example without loss of power or shift of direction or phase. The magnitude of the angle α is greater than a predetermined value, whereby said value is around 10° and at least bigger than 1°±1°. In the preferred embodiment the angle is between 10° and 45° and preferably about 15°. Liquids having a high adhesion capacity, such as viscous oil request a greater angle a than liquids having a low adhesion capacity, for example water, to let the liquid to flow along the surface 1b of the sheet. The material of which the sheet is made is also affecting the adhesion capacity of the liquid.

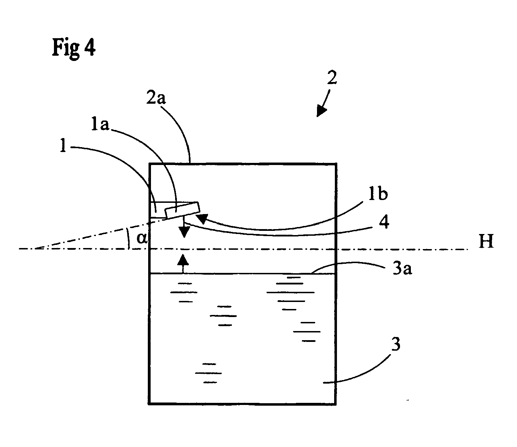

In an alternative embodiment, the radar antenna 1 is arranged at the wall of the tank and thereby directed towards the surface 3a of the liquid, see fig. 4.

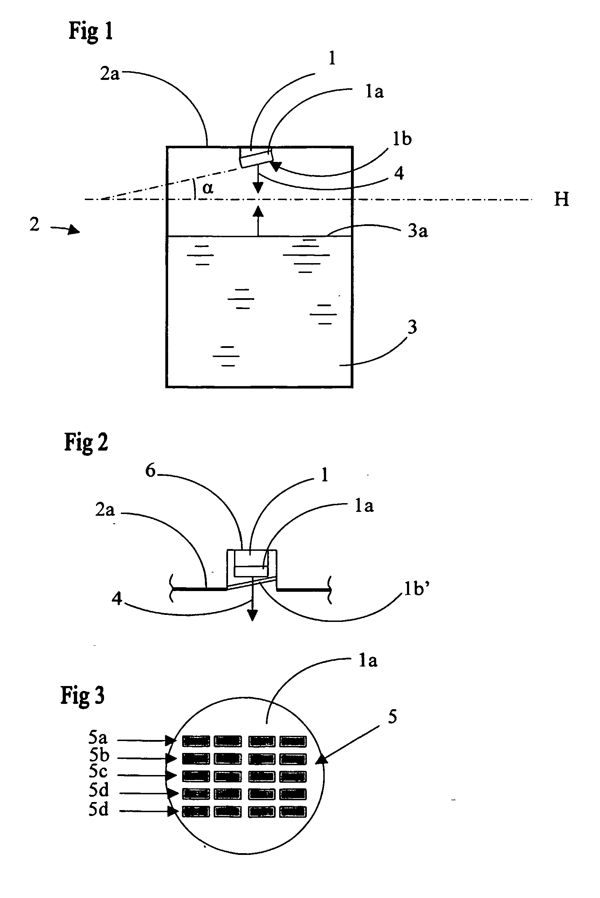

At the radar antenna there is a number of patches 5, see fig. 3, which are adapted to transmit radar waves 4. The patches 5 are arranged in a pattern, for example in rows and columns with predetermined distances. The patches 5 are adapted to be fed with micro waves, whereby the patches of each row, for example row 5a, obtain a phase shifted feeding in relation to the other rows of patches, for example rows 5b, 5c, 5d and 5e. When substantially all rows are phase shifted, corresponding to a portion of a radar wave length from each other, the highest energy of the radar waves transmitted from the radar antenna will be directed in a direction differing from the normal to the surface 1b, see fig. 1. Thus radar waves 4 with a high energy content can be collected to a radar lobe 4a and be directed substantially straight towards the liquid 3 in the tank although the surface 1b of the radar antenna 1 and consequently the patches 5 are arranged in an angle α in relation to the horizontal plane H. In an alternative embodiment the patches 5 are substituted with or combined with slots as known in prior art technology, whereby also the slots are arranged in a pattern according to the description above.

Thus, a big angle α gives a more rapid displacement of fluid from the plane surface 1b, but also provides a bigger phase shift between the rows 5a, 5b, 5c, 5d and 5e to make the radar lobe 4a to hit the surface 3a of the liquid in a perpendicular angle.

The radar antenna 1 is preferably a planar antenna comprising a substantially plane surface at the front.

In an alternative embodiment, see fig. 2, the front surface 1a is arranged a distance away from the plane surface 1b, for an example the plane surface 1b is included in a sheet 1b' transparent to radar waves 4, whereby said sheet is arranged at the top of the tank 2a and thereby constitute a part of the tank 2. By this, the radar antenna 1 can, advantageously, be encapsulated in a radar housing 6 at the roof 2a of the tank, which prevents moisture and other fluid to reach the radar antenna 1 from the outside. In this embodiment also other types of radar antennas are suited, such as a horn antenna or a parabolic antenna.

The invention should not be conceived as limited to the embodiments described above, but may be varied within the scope of the claims.

### List of reference figures

- 1: Radar antenna
- 1a: front
- 1b: plane surface
- 1b': sheet
- 2: tank
- 2a: roof of tank
- 3: liquid
- 3a: surface of liquid
- 4: radar waves
- 4a: radar lobe
- 5: patches
- 6: radar housing

- α: angle
- H: horizontal plane

## Claims

1. Radar antenna (1) for the transmission and reception of radar waves (4) for measuring the reflection of the level of a surface (3a) of a liquid (3) enclosed in a tank (2), wherein the radar antenna (1) is arranged above the surface (3a) of the liquid and substantially directed downwards towards said surface and said radar antenna (1) has a front surface (1a) from which said radar waves (4), in operation, leave/approaches the antenna (1), **characterized by** that at the front (1a), between said antenna (1) and the liquid (3) is a plane surface (1b) arranged in a angle (α) being greater than a predetermined value greater than 0° in relation to the horizontal plane H, whereby the plane surface (1b) is arranged to drained off by means of gravity, a fluid occurring on the surface (1b).

2. Radar antenna (1) according to claim 1, **wherein** the predetermined value is 2°.

3. Radar antenna (1) according to claim 1 or 2, **wherein** the predetermined value is 10°.

4. Radar antenna (1) according to any of the preceding claims, **wherein** the predetermined value is less than 45°.

5. Radar antenna (1) according to any of the preceding claims, **wherein** the surface (1b) of the sheet is substantially planar.

6. Radar antenna (1) according to any of the preceding claims, **wherein** the radar antenna (1) is a planar antenna.

7. Radar antenna (1) according to any of the preceding claims, **wherein** the surface sheet (1b) is arranged on the radar antennas front (1a).

8. Radar antenna (1) according to any of the claims 1-6, **wherein** the plane surface (1b) is arranged on a sheet (1b'), which is placed at a distance from the radar antenna (1) and between the radar antenna (1) and the fluid (3).

9. Radar antenna (1) according to claim 8, **wherein** the sheet (1b') constitutes a part of the tanks roof (2a).

## Patentansprüche

1. Radarantenne (1) zum Senden und Empfangen von Radarwellen (4), zum Messen der Reflexion des Niveaus einer Oberfläche (3a) einer Flüssigkeit (3), welche in einem Tank (2) eingeschlossen ist, wobei die Radarantenne (1) oberhalb der Oberfläche (3a) der Flüssigkeit angeordnet und im Wesentlichen nach unten gerichtet ist, hin zu der Oberfläche, und wobei die Radarantenne (1) eine vordere Fläche (1a) aufweist, an welcher die Radarwellen (4), in Betrieb, die Antenne (1) verlassen/erreichen, **dadurch gekennzeichnet, dass** die Vorderseite (1a), zwischen der Antenne (1) und der Flüssigkeit (3), eine ebene Fläche (1 b) ist, angeordnet in einem Winkel (α), welcher größer ist als ein vorbestimmter Wert größer als 0°, bezogen auf die horizontale Ebene (H), wobei die ebene Fläche (1 b) angeordnet ist, aufgrund der Schwerkraft dräniert zu werden, wenn ein Fluid an die Fläche (1 b) gelangt.

2. Radarantenne (1) nach Anspruch 1, wobei der vorbestimmte Wert 2° beträgt.

3. Radarantenne (1) nach Anspruch 1 oder 2, wobei der vorbestimmte Wert 10° beträgt.

4. Radarantenne (1) nach einem der vorhergehenden Ansprüche, wobei der vorbestimmte Wert kleiner ist als 45°.

5. Radarantenne (1) nach einem der vorhergehenden Ansprüche, wobei die Fläche (1b) des Schutzes im Wesentlichen eben ist.

6. Radarantenne (1) nach einem der vorhergehenden Ansprüche, wobei die Radarantenne (1) eine planare Antenne ist.

7. Radarantenne (1) nach einem der vorhergehenden Ansprüche, wobei die Schutzfläche (1 b) an der Vorderseite (1a) der Radarantenne angeordnet ist.

8. Radarantenne (1) nach einem der Ansprüche 1 bis 6, wobei die ebene Fläche (1 b) auf einem Schutz (1 b') angeordnet ist, welcher in einem Abstand von der Radarantenne (1) angebracht ist, und zwischen der Radarantenne (1) und dem Fluid (3).

9. Radarantenne (1) nach Anspruch 8, wobei der Schutz (1 b') einen Teil des Daches des Tanks (2a) ausmacht.

## Revendications

1. Antenne radar (1) destinée à la transmission et la réception d'ondes radar (4) pour mesurer la réflexion du niveau d'une surface (3a) d'un liquide (3) contenu dans un réservoir (2), dans laquelle l'antenne radar (1) est agencée au-dessus de la surface (3a) du liquide et sensiblement dirigée vers le bas dans la direction de ladite surface et ladite antenne radar (1) a une surface avant (1a) de laquelle lesdites ondes radar (4), en utilisation, quittent/s'approchent de l'antenne (1), **caractérisée en ce que**, à l'avant (1a), entre ladite antenne (1) et le liquide (3), se trouve une surface de plan (1 b) agencée à un angle (α) supérieur à une valeur prédéterminée supérieure à 0° par rapport au plan horizontal H, de telle manière que la surface de plan (1 b) soit agencée pour drainer par gravité un fluide se trouvant sur la surface (1 b).

2. Antenne radar (1) selon la revendication 1, dans laquelle la valeur prédéterminée est 2°.

3. Antenne radar (1) selon la revendication 1 ou 2, dans laquelle la valeur prédéterminée est 10°.

4. Antenne radar (1) selon l'une quelconque des revendications précédentes, dans laquelle la valeur prédéterminée est inférieure à 45°.

5. Antenne radar (1) selon l'une quelconque des revendications précédentes, dans laquelle la surface (1b) de la feuille est sensiblement planaire.

6. Antenne radar (1) selon l'une quelconque des revendications précédentes, dans laquelle l'antenne radar (1) est une antenne planaire.

7. Antenne radar (1) selon l'une quelconque des revendications précédentes, dans laquelle la feuille de surface (1 b) est agencée sur l'avant de l'antenne radar (1a).

8. Antenne radar (1) selon l'une quelconque des revendications 1 à 6, dans laquelle la surface de plan (1 b) est agencée sur une feuille (1 b'), qui est placée à une distance de l'antenne radar (1) et entre l'antenne radar (1) et le fluide (3).

9. Antenne radar (1) selon la revendication 8, dans laquelle la feuille (1 b') constitue une partie du toit du réservoir (2a).
